# EUROPEAN PATENT APPLICATION

(11) **EP 2 418 558 A2**
(43) Date of publication of application: **15.02.2012**
(21) Application number: 11177074.9
(22) Date of filing: 10.08.2011
(51) Int. Cl.: G06F 1/16, G06F 1/32

(54) **Flexible display apparatus and control method thereof**

(30) Priority: 13.08.2010 KR 20100078398
(71) Applicant: SAMSUNG ELECTRONICS CO., LTD., Suwon-si, Gyeonggi-do (KR)
(72) Inventor: Choi, Jun-hee, Gyeonggi-do (KR)
(74) Representative: Hewett, Jonathan Michael Richard

(57) **Abstract**

A flexible display apparatus includes: a flexible display unit; a sensor unit which detects an amount of bending of the flexible display unit; a power supply unit which supplies operating power to the flexible display unit; and a control unit which controls the power supply unit to stop supply of the operating power to the flexible display unit depending on the detected degree of bending of the flexible display unit. With this configuration, the flexible display apparatus is capable of decreasing power consumption and increasing user's convenience by stopping supply of operating power to a flexible display unit based on a degree of bending of the flexible display unit, without requiring a separate switch manipulation or input from a user.

## Description

The present invention relates to a flexible display apparatus and a control method thereof, and more particularly, to a flexible display apparatus which is capable of detecting bending of a flexible display unit and stopping supply of operating power to the flexible display unit based on the detected bending, and a control method thereof.

A flexible display refers to a display apparatus which can be bent. While a glass substrate is used as a substrate of a general display apparatus, a plastic film is used to provide the flexible display apparatus with flexibility allowing for folding and unfolding. Such a flexible display apparatus has properties of thinness, lightness, impact resistance as well as flexibility, which may result in an infinite amount of applications in the future due to its high manufacturability.

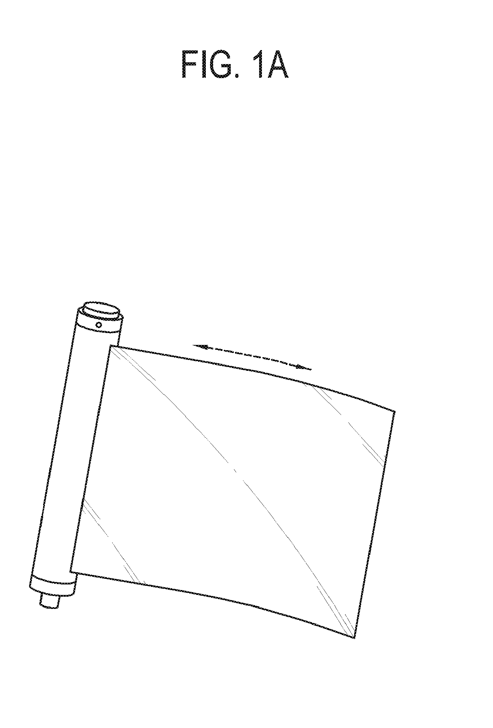

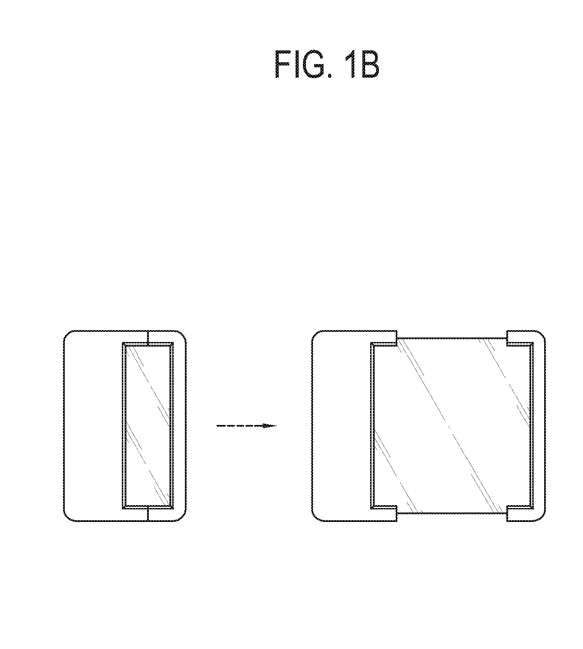

FIGS. 1A and 1B show an example of a flexible display apparatus which can be rolled up. The shown flexible display apparatus may be utilized for miniaturization of electronics equipped with a display unit.

However, such a flexible display apparatus requires operating power as well and may decrease the battery life, making the battery life a critical issue.

Accordingly, one or more exemplary embodiments provide a flexible display apparatus which is capable of decreasing power consumption and increasing a user's convenience by stopping the supply of operating power to a flexible display unit based on a degree of bending of the flexible display unit, without requiring a separate input signal from a user, and a control method thereof.

An aspect of an exemplary embodiment provides a flexible display apparatus including: a flexible display unit; a sensor unit which detects a degree of bending of the flexible display unit; a power supply unit which supplies operating power to the flexible display unit; and a control unit which controls the power supply unit to stop supply of the operating power to the flexible display unit depending on the detected degree of bending of the flexible display unit.

The sensor unit may detect a bending angle with respect to a predetermined bending central line of the flexible display unit, and the control unit may determine whether the detected bending angle lies within a predetermined reference angle range, and control the power supply unit to stop supply of the operating power to the flexible display unit if it is determined that the detected bending angle lies within the predetermined reference angle range.

The sensor unit may detect the degree of bending as a variation in electrical characteristics including at least one of current, voltage, resistance and capacitance in a predetermined bending central line of the flexible display unit, and the control unit may determine whether the detected variation in electrical characteristics lies within a predetermined reference range, and control the power supply unit to stop supply of the operating power to the flexible display unit if it is determined that the detected variation in electrical characteristics lies within the predetermined reference range.

The sensor unit may be located in a rear side of the flexible display unit and detect whether a front side of the flexible display unit contacts the rear side, and the control unit may control the power supply unit to stop supply of the operating power to the flexible display unit if it is detected that the front side of the flexible display unit contacts the rear side.

The control unit may determine whether a result detected by the sensor unit elapses a predetermined reference period of time, and control the power supply unit to stop supply of the operating power to the flexible display unit if it is determined that the result elapses the predetermined reference period of time.

The sensor unit may include at least one of a capacitive sensor, a resistive film type sensor and a flexible bend sensor.

An aspect of another exemplary embodiment provides a control method of a flexible display apparatus, including: detecting a degree of bending of a flexible display unit in a sensor unit; and controlling a power supply unit to stop supply of operating power to the flexible display unit depending on the detected degree of bending of the flexible display unit.

The detecting may include detecting a bending angle with respect to a predetermined bending central line of the flexible display unit, and the controlling may further include determining whether the detected bending angle lies within a predetermined reference angle range, and controlling the power supply unit to stop supply of the operating power to the flexible display unit if it is determined that the detected bending angle lies within the predetermined reference angle range.

The detecting may include detecting the degree of bending as a variation in electrical characteristics including at least one of current, voltage, resistance and capacitance in a predetermined bending central line of the flexible display unit, and the controlling may further include determining whether the detected variation in electrical characteristics lies within a predetermined reference range, and controlling the power supply unit to stop supply of the operating power to the flexible display unit if it is determined that the detected variation in electrical characteristics lies within the predetermined reference range.

The sensor unit may be located in a rear side of the flexible display unit and the detecting includes detecting whether a front side of the flexible display unit contacts the rear side, and the controlling may include controlling the power supply unit to stop supply of the operating power to the flexible display unit if it is detected that the front side of the flexible display unit contacts the rear side.

The controlling may further include determining whether a result detected by the sensor unit elapses a predetermined reference period of time, and controlling the power supply unit to stop supply of the operating power to the flexible display unit if it is determined that the result elapses the predetermined reference period of time.

The sensor unit may include at least one of a capacitive sensor, a resistive film type sensor and a flexible bend sensor.

As described above, according to the exemplary embodiments, there is provided a flexible display apparatus which is capable of decreasing power consumption and increasing user's convenience by stopping supply of operating power to a flexible display unit based on a degree of bending of the flexible display unit, without requiring a separate input signal from a user, and a control method thereof.

An aspect of another exemplary embodiment provides a control method of a display apparatus comprising a flexible display, the method including: sensing an amount of bending of the flexible display; controlling whether electrical power is supplied to the flexible display based on the amount of bending of the flexible display.

The above and/or other aspects will become apparent and more readily appreciated from the following description of the exemplary embodiments, taken in conjunction with the accompanying drawings, in which:
FIGS. 1A and 1B show an example of a flexible display apparatus;
FIG. 2 is a control block diagram of a flexible display apparatus according to one exemplary embodiment;
FIGS. 3A and 3B show one example of a detecting operation of a sensor unit in the flexible display apparatus shown in FIG. 2;
FIGS. 4A and 4B show another example of a detecting operation of the sensor unit in the flexible display apparatus shown in FIG. 2; and
FIG. 5 is a flow chart of a control method of the flexible display apparatus shown in FIG. 2.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein.

Descriptions of well-known parts are omitted for clarity, and like reference numerals refer to like elements throughout. Expressions such as "at least one of," when preceding a list of elements, modify the entire list and not the individual elements of the list

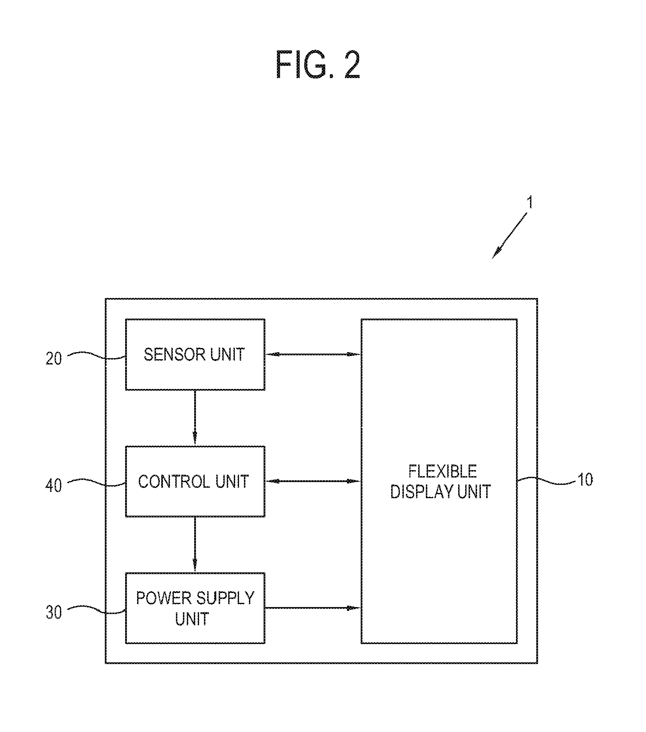

FIG. 2 is a control block diagram of a flexible display apparatus according to one exemplary embodiment.

Referring to FIG. 2, a flexible display apparatus 1 includes a flexible display unit 10, a sensor unit 20, a power supply unit 30 and a control unit 40 which controls the flexible display apparatus 1, the flexible display unit 10, the sensor unit 20, and the power supply unit 30.

In this exemplary embodiment, the flexible display apparatus 1 may be implemented by any type of electronic device equipped with the flexible display unit 10, including, but not limited to, a mobile phone, a personal digital assistant (PDA), an MP3 player, a PC monitor, a portable PC (such as a net book, a smart book and a laptop computer), a TV and an electronic book.

The flexible display unit 10 may include a display which can be bent, crooked, folded and rolled, such as flexible displays or electronic papers. Electronic paper is a display technology with application of general ink properties to paper and is different from the typical flat displays in that the electronic paper uses reflective light. The electronic paper may use electrophoresis using twist balls or capsules to change pictures or characters.

The flexible displays are light, unbreakable and robust displays including a thin and flexible substrate which can be bent, crooked, folded and rolled, such as a paper, while maintaining display features typically included in rigid flat displays.

The flexible display unit 10 may include a substrate (made of for example, flexible plastics, metal foil, thin glass or the like), a flexible displaying part (for example, an electroluminescent display (ELD), electrophoretic display (EPD), electrochromic display (ECD), liquid crystal display (LCD), active matrix LCD (AMLCD), active matrix organic light emitting diode (AMOLED) or the like), a driver unit (for example, a-Si thin film transistor (TFT), low temperature poly silicon (LTPS) TFT, organic TFT (OTFT), oxide TFT, nano TFT or the like) which drives the displaying part, and a protection film which protects the displaying part.

The sensor unit 20 may detect an bending of the flexible display unit 10, and may also detect an amount or degree of bending of the flexible display unit 10.

As used herein, the term "bending" is meant to include "crooking", "curving", "folding", and "rolling". That is, bending includes moving any portion of the flexible display unit 10 out of the plane along which the remainder of the display unit 10 is disposed.

The sensor unit 20 may include at least one of a capacitive sensor, a resistive film type sensor and a flexible bend sensor.

The capacitive sensor is a sensor using a capacitive coupling effect and is typically made of glass with high conductivity such as indium tin oxide (ITO). The capacitive sensor is located at an edge of the flexible display unit 10 and detects a change of current flowing through the flexible display unit 10.

The resistive film type sensor detects a change of resistance caused by making contact between an upper ITO film and a lower ITO film, which are initially separated from each other with a gap formed therebetween.

The flexile bend sensor is a sensor which itself bends and detects a resistance which is varied in proportion to a degree of bending. The flexible bend sensor includes carbon resistive elements in a thin bendable substrate.

The flexible bend sensor may have a strip shape and may be adhered to the entire rear side of the flexible display unit in the form of a lattice.

The sensor unit 20 may be adhered to the entire rear side of the flexible display unit 10.

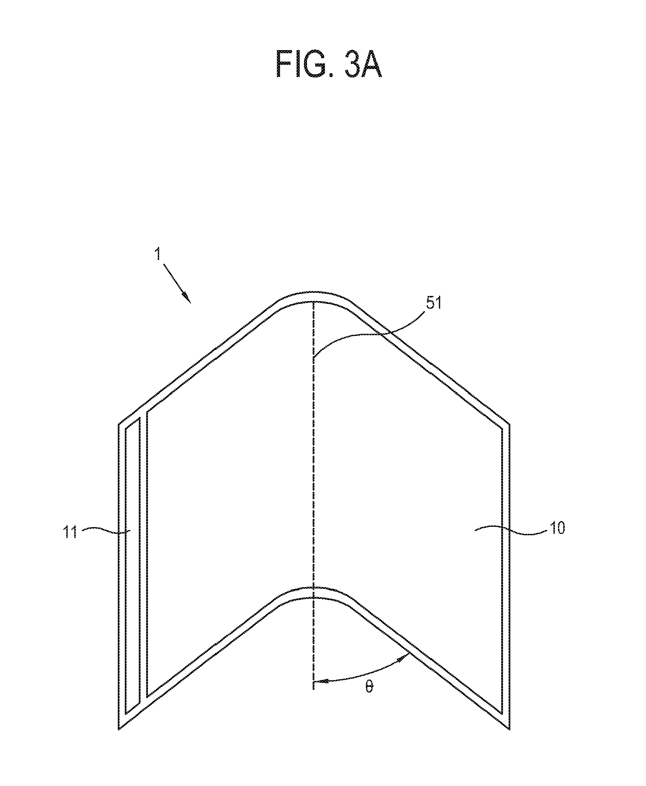

A detecting operation of the sensor unit 20 will be described in more detail later with reference to FIGS. 3A to 4B.

The power supply unit 30 supplies operating power to the flexible display unit 10 and other components in the flexible display apparatus 1. The power supply unit 30 may convert commercial AC power into power suitable for use in various components in the flexible display apparatus 1.

In addition, the power supply unit 30 may further include a battery (not shown) which has a predetermined capacity for charging with power from the power supply unit. The battery may serve as a secondary power supply for assisting the power supply unit 30 in supplying operating power to the flexible display unit 10.

The power supply unit 30 and the battery (not shown) may selectively supply power to the flexible display unit 10 under control of the control unit 40. For example, the control unit 40 controls the power supply unit 30 to supply power if commercial AC power is input, while controlling the battery to supply power if the commercial AC power is not input.

The control unit 40 controls the power supply unit 30 to stop supply of the operating power to the flexible display unit 10 depending on bending of the flexible display unit detected by the sensor unit 20.

A control operation of the control unit 40 will be described in more detail later with reference to FIGS. 3A to 4B along with the detecting operation of the sensor unit 20.

In this exemplary embodiment, the flexible display apparatus 1 may further include a user input unit (not shown) for input of a selection from a user.

The user input unit (not shown) receives an input from the user and may be implemented by, for example, a remote controller, an operation panel, a touch panel or any other input units known in the art. The user input unit may include an input key to select power ON/OFF of the flexible display apparatus 1. The input received in the user input unit from the user is transmitted to the control unit 40.

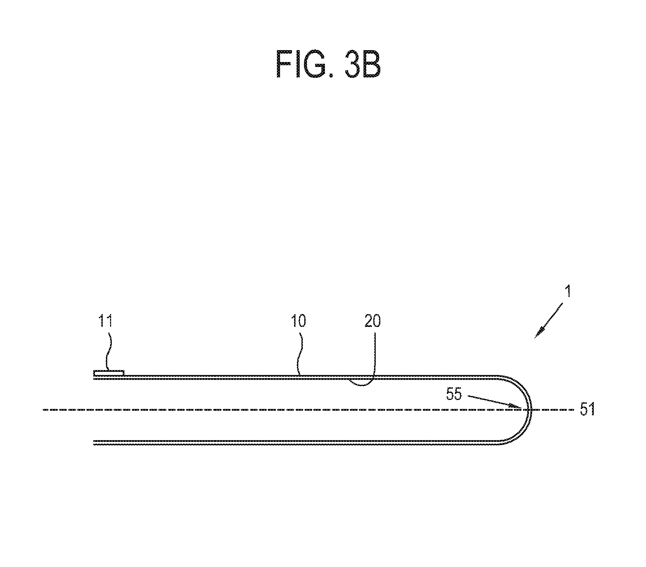

FIGS. 3A and 3B show one example of detecting operation of the sensor unit in the flexible display apparatus shown in FIG. 2.

Referring to FIG. 3A, the flexible display apparatus 1 may generally include the flexible display unit 10 and a part 11 including the power supply unit 30, the control unit 40 and a user input unit (not shown).

As shown in FIG. 3B, the sensor unit 20 is adhered to the entire rear side of the flexible display unit 10.

The flexible display apparatus 1 may be bent, folded, crooked or rolled by a user due to its bendability.

As shown in FIG. 3A, the flexible display apparatus 1 may be bent, folded or crooked with a predetermined bending angle (θ) with respect to a plane containing a predetermined bending central line 51 of the flexible display unit. The plane containing the predetermined bending central line 51 may be orthogonal to a plane containing the flexible display apparatus in a state in which it is not bent. The flexible display apparatus 1 may be freely bent, folded or crooked backward and forward with respect to the flexible display unit 10. Accordingly, if the flexible display apparatus 1 is bent forward with respect to the flexible display unit 10, the predetermined bending angle (θ) refers to an angle formed between the plane containing the predetermined bending central line 51 and a front side (an image displaying plane) of the flexible display unit 10. If the flexible display apparatus is bent backward with respect to the flexible display unit 10, the predetermined bending angle (θ) refers to an angle formed between the plane containing the predetermined bending central line 51 and a rear side (a sensor adhering plane) of the flexible display unit 10.

The sensor unit 20 may detect a degree of bending of the flexible display unit 10 as the predetermined bending angle. In one exemplary embodiment, the sensor unit 20 may be implemented by a flexible bend sensor which may detect a resistance change depending on the degree of bending of the flexible display unit 10 and detect the bending angle based on the detected resistance change. Specifically, the resistance increases in proportion to a degree of bending, crooking or folding of the flexible display unit 10. Accordingly, a higher bending angle may be detected with higher resistance.

Information on the bending angle detected by the sensor 20 is transmitted to the control unit 40. Upon receiving the bending angle detected by the sensor unit 20, the control unit 40 checks whether or not the bending angle is within a predetermined reference range. For example, the predetermined reference range may be 0° to 45°. Accordingly, the control unit 40 determines whether or not the detected bending angle is within a range of 0° to 45°, and, if the determination is affirmative, determines that a user does not use the flexible display apparatus 1 any longer.

If the control unit 40 determines that the user does not use the flexible display apparatus 1 any longer, the control unit 40 may control the power supply unit 30 to stop supply of the operating power to the flexible display unit 10 so that the flexible display apparatus 1 can enter a power saving mode.

Alternatively, the control unit 40 checks whether or not the bending angle detected by the sensor unit 20 does not change for a predetermined reference period of time and may control the power supply unit 30 to stop supply of the operating power to the flexible display unit 10 after the lapse of the reference period of time.

In addition, the control unit 40 may control the power supply unit 30 to turn off the flexible display apparatus 1. In this case, the control unit 40 may check whether or not the flexible display apparatus 1 maintains the same condition after passage of the reference period of time, for example after the power saving mode, and then control the power supply unit 30 to turn off the flexible display apparatus 1. Therefore, the control unit controls the power supply unit 30 to maintain the flexible display apparatus 1 in a power saving mode if the result remains in the same state for the predetermined reference period of time, and controls the power supply unit 30 to stop supplying the operating power to the flexible display apparatus 1 if the power saving mode has been maintained for a predetermined period of time.

FIG. 3B shows the condition where the flexible display apparatus 1 is substantially folded.

If the sensor unit 20 is implemented by a flexible bend sensor as shown in FIG. 3A, the sensor unit 20 may detect a change of resistance depending on a degree of bending of the flexible display unit. The detected change of resistance is transmitted to the control unit 40.

In another exemplary embodiment, the sensor unit 20 may be implemented by a resistive film type sensor. The sensor unit 20 implemented by the resistive film type sensor may be adhered to the entire rear side of the flexible display unit 10. In this case, when the flexible display unit 1 is bent as shown in FIG. 3B, a portion 55 of the sensor unit 20 corresponding to the bending central line 51 of the flexible display unit 10 is folded above a predetermined angle and is accordingly pressed, which produces a voltage change. Then, the sensor unit 20 detects such a voltage change and transmits the detected voltage change to the control unit 40.

Information on the voltage change detected by the sensor unit 20 is transmitted to the control unit 40.

In a further exemplary embodiment, the sensor unit 20 implemented by a capacitive sensor may be adhered to the entire rear side of the flexible display unit 10. In this case, similar to the resistive film type sensor, the portion 55 of the sensor unit 20 corresponding to the bending central line 51 of the flexible display unit 10 is folded above a predetermined angle and is accordingly pressed, which produces a capacitance change. The sensor unit 20 detects such a capacitance change and transmits the detected capacitance change to the control unit 40.

Then, upon receiving information on a variation in electrical characteristics such as the resistance change, the voltage change or the capacitance change detected by the sensor unit 20, the control unit 40 determines whether or not the detected variation in electrical characteristics is within a predetermined reference range, and if the determination is affirmative, the control unit 40 determines that a user is no longer using the flexible display apparatus 1. If the control unit 40 determines that the user no longer is using the flexible display apparatus 1, the control unit 40 may control the power supply unit 30 to stop supply of the operating power to the flexible display unit 10. Alternatively, the control unit 40 may control the power supply unit 30 to turn off the flexible display apparatus 1.

As another alternative, the control unit 40 checks whether or not a variation in electrical characteristics detected by the sensor unit 20 has occurred a predetermined reference period of time and may control the power supply unit 30 to stop supply of the operating power to the flexible display unit 10 if no variation has occurred within the reference period of time or turn off the flexible display apparatus 1 if no variation has occurred within the reference period of time.

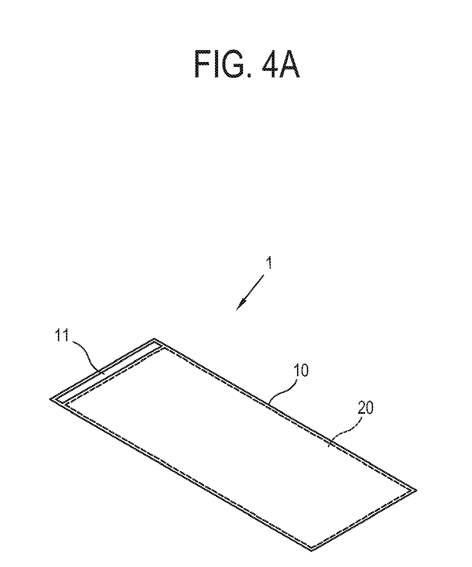

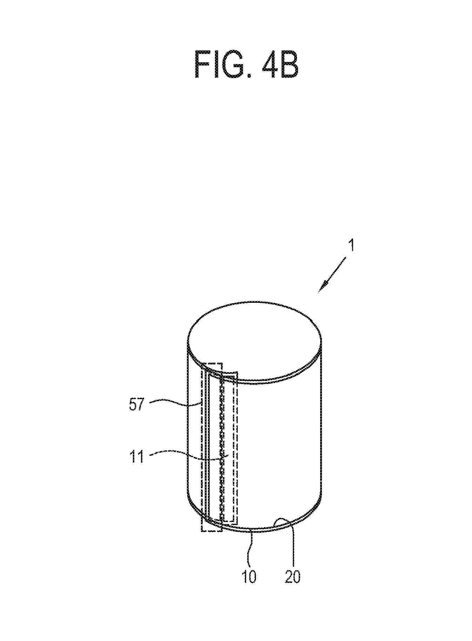

FIGS. 4A and 4B show another example of a detecting operation of the sensor unit in the flexible display apparatus shown in FIG. 2.

Referring to FIG. 4A, the flexible display apparatus 1 may generally include the flexible display unit 10 and a part 11 including the power supply unit 30, the control unit 40 and a user input unit (not shown). The sensor unit 20 may be adhered to the entire rear side of the flexible display unit 10.

If a user rolls the flexible display apparatus 1 as shown in FIG. 4B, the sensor unit 20 may detect whether or not a front side (an image displaying plane) of the flexible display unit 10 contacts its rear side (a sensor unit adhering plane).

In one exemplary embodiment, the sensor unit 20 is implemented by a capacitive sensor. The rear side of the flexible display unit 10 is provided with a certain current due to the capacitive sensor and the front side of the flexible display unit 10 is connected to ground. The front side is isolated from the rear side such that they are not directly interconnected.

In this case, when a user rolls the flexible display apparatus 1 as shown in FIG. 4B, the front side of the flexible display unit 10 may contact the rear side over a certain range 57. In this contact range, electrons flow from the sensor unit located on the rear side into the front side and eventually to ground. Accordingly, the sensor unit detects such a flow of electrons to detect whether or not the front side of the flexible display unit 10 contacts the rear side of the flexible display unit 10.

A result of the detection of contact between the rear side and front side of the flexible display unit 10 is transmitted to the control unit 40. Then, the control unit 40 determines that a user is no longer using the flexible display apparatus 1 and may control the power supply unit 30 to stop supply of the operating power to the flexible display unit 10. Alternatively, the control unit 40 may control the power supply unit 30 to turn off the flexible display apparatus 1 when it is determined that the user is no longer using the flexible display apparatus 1.

As another alternative, the control unit 40 checks whether or not the contact detected by the sensor unit 20 remains in the same state for a predetermined reference period of time and may control the power supply unit 30 to stop supply of the operating power to the flexible display unit 10 or turn off the flexible display apparatus 1 if the detected contact does not change for the reference period of time.

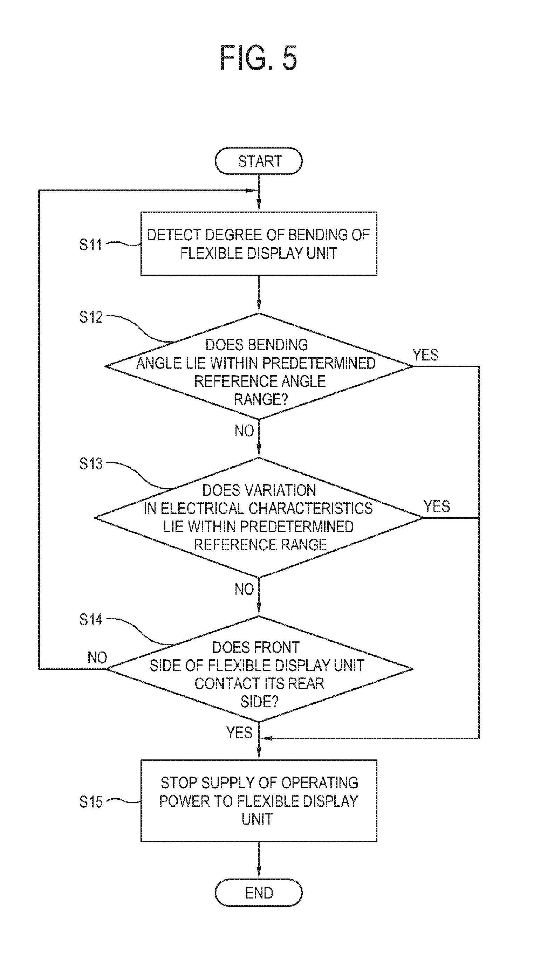

FIG. 5 is a flow chart of a control method of the flexible display apparatus shown in FIG. 2.

The sensor unit 20 detects a degree of bending of the flexible display unit (S11).

A result of the detection is transmitted to the control unit 40 which may then check whether or not the detected bending angle is within a predetermined reference range (S12), whether or not the detected variation in electrical characteristics is within a predetermined reference range (S13), or whether or not the front side of the flexible display unit contacts its rear side (S14).

In step S12, the sensor unit 20 may detect the degree of bending of the flexible display unit 10 as a predetermined bending angle with respect to a predetermined bending central line of the flexible display unit 10.

In step S13, the sensor unit 20 may detect the degree of bending of the flexible display unit 10 as a variation in electrical characteristics including at least one of current, voltage, resistance and capacitance in the predetermined bending central line of the flexible display unit 10.

In step S14, the sensor unit 20 may detect the degree of bending of the flexible display unit 10 as a contact between the front side and rear side of the flexible display unit.

Operations S12 to S14 may be performed individually or in combination depending on the kind of sensors included in the sensor unit 20 and may be performed in an order different from the shown order.

If any of the operations S12 to S14 are checked as Yes, the control unit 40 may control the power supply unit 30 to stop supply of the operating power to the flexible display unit 10. Alternatively, the control unit 40 may control the power supply unit 30 to turn off the flexible display apparatus 1.

Although a few exemplary embodiments have been shown and described, it will be appreciated by those skilled in the art that changes may be made in these exemplary embodiments without departing from the invention, the scope of which is defined in the appended claims.

## Claims

1. A flexible display apparatus comprising:
a flexible display unit;
a sensor unit which detects bending of the flexible display unit;
a power supply unit which supplies operating power to the flexible display unit; and
a control unit which controls the power supply unit to stop supplying the operating power to the flexible display unit based on the detected bending of the flexible display unit.

2. The flexible display apparatus according to claim 1, wherein the sensor unit detects a bending angle with respect to a predetermined bending central line of the flexible display unit, and wherein the control unit determines whether the detected bending angle is within a predetermined reference angle range, and controls the power supply unit to stop supplying the operating power to the flexible display unit if the detected bending angle lies within the predetermined reference angle range.

3. The flexible display apparatus according to claim 1 or claim 2, wherein the sensor unit detects an amount of bending based on a variation in at least one of current, voltage, resistance and capacitance in the predetermined bending central line of the flexible display unit.

4. The flexible display apparatus according to any one of claims 1 to 3, wherein the sensor unit is located at a rear side of the flexible display unit and detects bending of the flexible display unit in dependence on whether a front side of the flexible display unit contacts the rear side, and wherein the control unit controls the power supply unit to stop supplying the operating power to the flexible display unit if the front side of the flexible display unit contacts the rear side.

5. The flexible display apparatus according to any one of claims 1 to 4, wherein the control unit determines whether a result detected by the sensor unit remains in the same state for a predetermined reference period of time, and controls the power supply unit to stop supplying the operating power to the flexible display unit if the result remains in the same state for the predetermined reference period of time.

6. The flexible display apparatus according to claim 5, wherein the control unit controls the power supply unit to maintain the flexible display apparatus in a power saving mode if the result remains in the same state for the predetermined reference period of time, and controls the power supply unit to stop supplying the operating power to the flexible display apparatus if the power saving mode has been maintained for a predetermined period of time.

7. The flexible display apparatus according to any one of claims 1 to 6, wherein the sensor unit comprises at least one of a capacitive sensor, a resistive film type sensor and a flexible bend sensor.

8. A control method of a flexible display apparatus, comprising:
detecting bending of a flexible display unit using a sensor unit; and
controlling a power supply unit to stop supplying operating power to the flexible display unit based on the detected bending of the flexible display unit.

9. The control method according to claim 8, wherein the detecting comprises detecting a bending angle with respect to a predetermined bending central line of the flexible display unit, and wherein the controlling comprises determining whether the detected bending angle is within a predetermined reference angle range, and controlling the power supply unit to stop supplying the operating power to the flexible display unit if the detected bending angle is within the predetermined reference angle range.

10. The control method according to claim 8 or claim 9, wherein the detecting comprises detecting an amount of bending as a variation in at least one of current, voltage, resistance and capacitance in a predetermined bending central line of the flexible display unit.

11. The control method according to any one of claims 8 to 10, wherein the detecting comprises detecting bending of the flexible display unit in dependence on whether a front side of the flexible display unit contacts a rear side, the sensor unit being located on a rear side of the flexible display unit and wherein the controlling comprises controlling the power supply unit to stop supplying the operating power to the flexible display unit if the front side of the flexible display unit contacts the rear side of the flexible display unit.

12. The control method according to any one of claims 8 to 11, wherein the controlling further comprises determining whether a result detected by the sensor unit remains in the same state for a predetermined reference period of time, and controlling the power supply unit to stop supplying the operating power to the flexible display unit if the result remains in the same state for the predetermined reference period of time.

13. The control method according to claim 11, wherein the controlling further comprises maintaining the flexible display apparatus in a power saving mode if the result remains in the same state for the predetermined reference period of time, and controlling the power supply unit to stop supplying the operating power to the flexible display apparatus if the power saving mode has been maintained for a predetermined period of time.

14. The control method according to any one of claims 8 to 13, wherein the sensor unit comprises at least one of a capacitive sensor, a resistive film type sensor and a flexible bend sensor.
